# EUROPEAN PATENT SPECIFICATION

(11) **EP 2 561 980 B1**
(45) Date of publication and mention of the grant of the patent: **18.09.2013**
(21) Application number: 12172676.4
(22) Date of filing: 20.06.2012
(51) Int. Cl.: B29D 30/30

(54) **Tire production method**
Reifenherstellungsverfahren
Procédé de production de pneus

(30) Priority: 22.08.2011 JP 2011180653
(43) Date of publication of application: 27.02.2013
(73) Proprietor: Sumitomo Rubber Industries, Ltd., Hyogo-ken (JP)
(72) Inventor: Nobukuni, Shingo, Kobe-shi, Hyogo-ken 651-0072 (JP)
(74) Representative: Manitz, Finsterwald & Partner GbR

(56) References cited:
- EP-A1- 0 548 735
- EP-A2- 1 022 119
- US-A- 4 989 658
- US-A- 5 178 703

## Description

### BACKGROUND OF THE INVENTION

### Field of the Invention

The present invention relates to a tire production method. The features of the preamble of the independent claims are known from US4989658A. US5178703A, EP1022119A and EP0548735A disclose also tire production methods.

### Description of the Related Art

A belt of a tire is typically covered by a band. The band contains a cord. The cord extends substantially in the circumferential direction. The cord is helically wound. The band has a so-called jointless structure. The band holds the belt. Thus, lifting of the belt is restrained.

The band is formed by a ribbon being helically wound. The ribbon is formed of a cord and a topping rubber. Tires including the bands, and production methods therefor have been variously suggested. The examples of such tires and production methods are disclosed in JP2009-051417, JP2001-063311, and JP2002-019415.

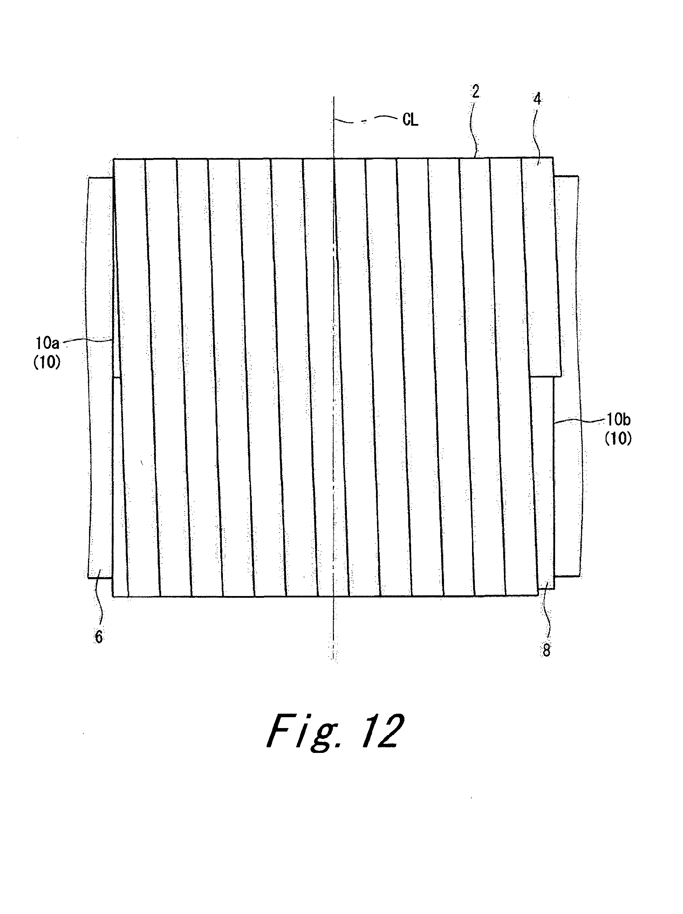

FIG. 12 shows a state in which a band 2 is formed by using a conventional production method. In FIG. 12, the leftward/rightward direction represents the tire axial direction, and the upward/downward direction represents the tire circumferential direction. In FIG. 12, an alternate long and short dash line CL represents the tire equator plane. The band 2 of the tire is formed by using a ribbon 4. The ribbon 4 is helically wound from a first end 10a of a belt 8 layered over a cylindrical carcass ply 6, toward a second end 10b thereof.

As shown in FIG. 12, the ribbon 4 is wound so as to be slanted relative to the circumferential direction. Therefore, in the second end 10b portion of the belt 8 at which winding of the ribbon 4 is ended, the belt 8 includes both a portion which is held by the ribbon 4 and a portion which is not held by the ribbon 4, in a mixed manner. Therefore, in the second end 10b portion of the belt 8, the holding force of the band 2 is not sufficient. The mixed inclusion affects a road noise (R/N) and a radial runout (RR) of the tire.

The width of the band 2 may be extended in order to cover the entirety of the belt 8 with the band 2. In this case, a problem arises that uniformity deteriorates and conicity worsens in the tire. Further, in this tire, an end 10 portion of the belt 8 is excessively held by the band 2. This excessive holding causes rounding of a ground contact shape. The rounding not only affects a road noise (R/N) and a radial runout (RR), but also deteriorates handling stability.

An object of the present invention is to make available a tire that enables excellent uniformity and handling stability.

### SUMMARY OF THE INVENTION

The tire production method according to the present invention as defined in claim 1, is executed by using a former having a cylindrical rotatable drum and a head movable in an axial direction. The tire production method includes the steps of:
(1) extruding a cord and a topping rubber, to obtain a ribbon;
(2) winding a sheet around the drum, to obtain a belt;
(3) feeding the ribbon from the head, to layer a foremost end of the ribbon over the belt;
(4) helically winding the ribbon by rotating the drum with the head being moved toward an end of the belt in the axial direction; and
(5) winding the ribbon in a circumferential direction by stopping moving the head, at the end of the belt, with rotation of the drum being maintained.

In the step of winding the ribbon in the circumferential direction by stopping moving the head, a rotation angle θs of the drum is greater than or equal to 360°. The width of the ribbon is in a range of 10-15 mm.

The tire production method as defined in claim 2, further includes the step of
(6) winding, after the foremost end of the ribbon is layered over the belt, the ribbon in the circumferential direction by rotating the drum without moving the head, in which a rotation angle θf of the drum is greater than or equal to 360°.

### BRIEF DESCRIPTION OF THE DRAWINGS

FIG. 1 is a cross-sectional view of a portion of a pneumatic tire produced by a production method according to an embodiment of the present invention;
FIG. 2 is a cross-sectional perspective view of a portion of a ribbon used for forming a band of the tire shown in FIG. 1;
FIG. 3 is a plan view schematically illustrating a state in which the tire shown in FIG. 1 is produced;
FIG. 4 is a plan view schematically illustrating another state of the tire being produced, which is different from the state shown in FIG. 3;
FIG. 5 is a side view of a portion shown in FIG. 4;
FIG. 6 is a plan view schematically illustrating another state of the tire being produced, which is different from the state shown in FIG. 4;
FIG. 7 is a side view schematically illustrating another state of the tire being produced, which is different from the state shown in FIG. 6;
FIG. 8 is a plan view schematically illustrating another state of the tire being produced, which is different from the state shown in FIG. 7;
FIG. 9 is a plan view of a band of a pneumatic tire which is produced by a production method according to another embodiment of the present invention;
FIG. 10 is a plan view illustrating a state in which the band shown in FIG. 9 is formed;
FIG. 11 is a plan view illustrating another state of the band being formed, which is different from the state shown in FIG. 10; and
FIG. 12 is a plan view of a band of a pneumatic tire which is produced by a conventional production method.

### DESCRIPTION OF THE PREFERRED EMBODIMENTS

The following will describe in detail the present invention based on preferred embodiments with reference to the accompanying drawing.

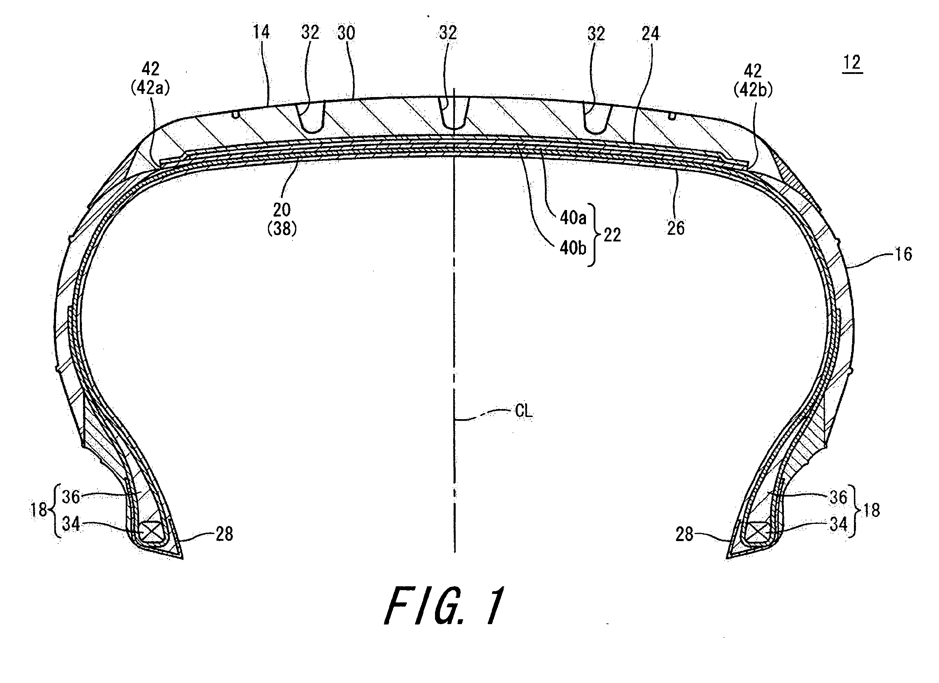

A tire 12 shown in FIG. 1 includes a tread 14, sidewalls 16, beads 18, a carcass 20, a belt 22, a band 24, an inner liner 26, and chafers 28. The tire 12 is of a tubeless type. The tire 12 is mounted to a passenger car.

In FIG. 1, the upward/downward direction represents the radial direction, the leftward/rightward direction represents the axial direction, and the direction orthogonal to the surface of the sheet represents the circumferential direction. The tire 12 has a shape which is almost bilaterally symmetric about an alternate long and short dash line CL shown in FIG. 1. The alternate long and short dash line CL represents the equator plane of the tire 12.

The tread 14 is formed of a crosslinked rubber excellent in abrasion resistance. The tread 14 has a shape projecting outward in the radial direction. The tread 14 includes a tread surface 30. The tread surface 30 can contact with a road surface. The tread surface 30 has grooves 32 formed therein. A tread pattern is formed due to the grooves 32. The tread 14 may not have the grooves 32.

The sidewalls 16 extend from edges, respectively, of the tread 14 in almost the radially inward direction. The sidewalls 16 are formed of a crosslinked rubber. The sidewalls 16 absorb impact from a road surface due to their flexure. Further, the sidewalls 16 prevent injury of the carcass 20.

The beads 18 are located almost inwardly of the sidewalls 16, respectively, in the radial direction. Each bead 18 includes a core 34, and an apex 36 extending from the core 34 outward in the radial direction. The core 34 is formed so as to be ring-shaped. The core 34 is formed so as to be wound with a non-stretchable wire. A steel wire is typically used for the core 34. The apex 36 is tapered outward in the radial direction. The apex 36 is formed of a highly hard crosslinked rubber.

The carcass 20 is formed as a carcass ply 38. The carcass ply 38 extends on and between the beads 18 located on both sides. The carcass ply 38 extends under and along the tread 14 and the sidewalls 16. The carcass ply 38 is turned up around each core 34 from the inner side to the outer side in the axial direction.

The carcass ply 38 is formed of multiple cords aligned with each other, and a topping rubber, which is not shown. An absolute value of an angle of each cord relative to the equator plane usually ranges from 70° to 90°. In other words, the carcass 20 forms a radial structure. The cords are typically formed of an organic fiber. Examples of the preferable organic fiber include polyester fibers, nylon fibers, rayon fibers, polyethylene naphthalate fibers, and aramid fibers. The carcass 20 forming a bias structure may be used.

The belt 22 is located outwardly of the carcass 20 in the radial direction. The belt 22 is layered over the carcass 20. The belt 22 reinforces the carcass 20. The belt 22 includes an inner layer 40a and an outer layer 40b. Each of the inner layer 40a and the outer layer 40b includes multiple cords aligned with each other, and a topping rubber, which is not shown. Each cord is tilted relative to the equator plane. An absolute value of the tilt angle is greater than or equal to 10°, and is not greater than 35°. The direction in which the cord of the inner layer 40a is tilted is opposite to the direction in which the cord of the outer layer 40b is tilted. A preferable material of the cords is a steel. An organic fiber may be used for the cords.

The band 24 is located inwardly of the tread 14 in the radial direction. The band 24 covers the belt 22. In the tire 12, the band 24 extends from the equator plane toward an end 42 of the belt 22. The band 24 extends from a first end 42a of the belt 22 toward a second end 42b of the belt 22 in the axial direction. The band 24 is a full band. The band 24 is formed of a cord and a topping rubber, which is not shown. The cord extends substantially in the circumferential direction, and is helically wound. The band 24 has a so-called jointless structure. The belt 22 is held by the cord, so that lifting of the belt 22 is restrained.

In the tire 12, the cord is typically formed of an organic fiber. Examples of the preferable organic fiber include nylon fibers, polyester fibers, rayon fibers, polyethylene naphthalate fibers, and aramid fibers. A hybrid cord formed by a plurality of organic fibers being combined with each other may be used as the cord. A cord formed of a steel may be used as the cord.

In the tire 12, the outer diameter of the cord is preferably greater than or equal to 0.5 mm, and is preferably not greater than 1.5 mm. When the cord is formed of an organic fiber, an intermediate elongation of the cord is preferably greater than or equal to 0.8%, and is preferably not greater than 15%.

In the description herein, the intermediate elongation of the cord is measured in compliance with an "elongation at specific load" of JIS L 1017-8.7. A test temperature is 25°C in the measurement of the intermediate elongation. The cord is under a load of 50 N.

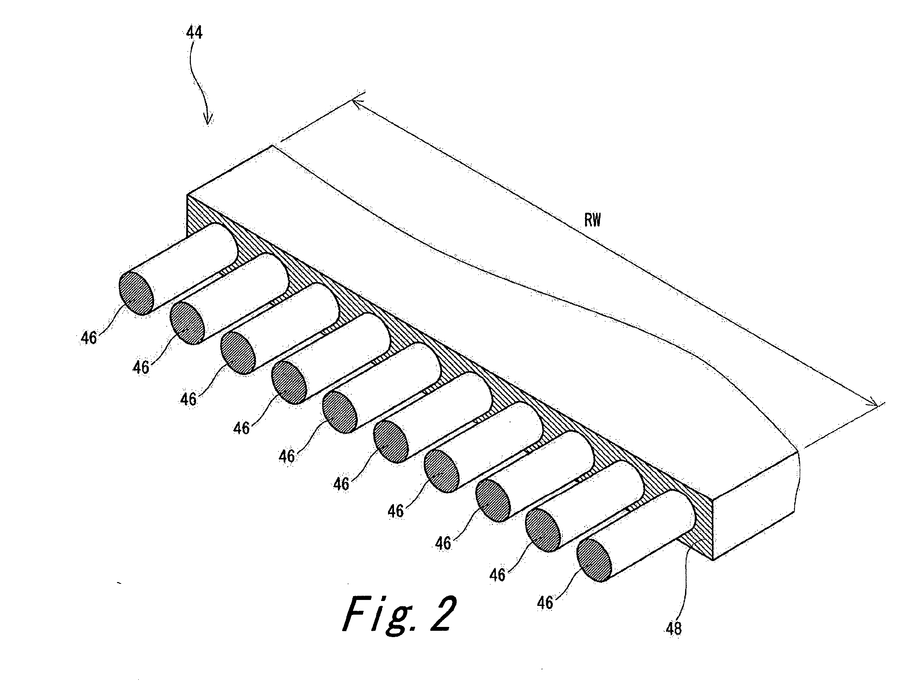

For the tire 12, the band 24 is formed with the use of a ribbon 44 shown in FIG. 2. The ribbon 44 includes a plurality of cords 46, and a topping rubber 48. Each cord 46 extends in the length direction of the ribbon 44. As shown in the drawings, in the tire 12, the number of the cords 46 included in the ribbon 44 which is used for forming the band 24 is ten. The number of the cords 46 included in the ribbon 44 is determined in consideration of, for example, specifications and processability of the tire 12 as necessary.

In FIG. 2, a double-headed arrow RW represents the width of the ribbon 44. In this production method, the width RW of the ribbon 44 is preferably greater than or equal to 7.0 mm, and is preferably not greater than 22 mm. When the width RW is set to be greater than or equal to 7.0 mm, productivity of the tire 12 is restrained from being influenced by a time required for forming the band 24. In this production method, productivity is favorable. According to the invention, the width RW is greater than or equal to 10 mm. When the width RW is set to be not greater than 22 mm, the band 24 that can appropriately hold the belt 22 can be obtained. The tire 12 including the band 24 is excellent in uniformity, and has an appropriate conicity. The tire 12 enables excellent ride comfort and handling stability. According to the invention, the width RW is not greater than 15 mm.

The tire 12 is produced in the following manner. The plurality of cords 46 are extruded together with the topping rubber 48, to obtain the ribbon 44. The ribbon 44 is supplied to a former (not shown) together with other components.

The former includes a cylindrical drum and a head. The drum is rotatable. The head feeds the ribbon 44, and is movable in the axial direction.

In this production method, the drum is rotated to wind the carcass ply 38 around the drum. Thus, the carcass ply 38 having a cylindrical shape is formed. A first sheet is wound around the carcass ply 38 having the cylindrical shape, to form the inner layer 40a which forms a part of the belt 22. A second sheet is wound around the inner layer 40a, to form the outer layer 40b which forms another part of the belt 22. Thus, the belt 22 is obtained. The ribbon 44 is wound on and around the belt 22, to form the band 24.

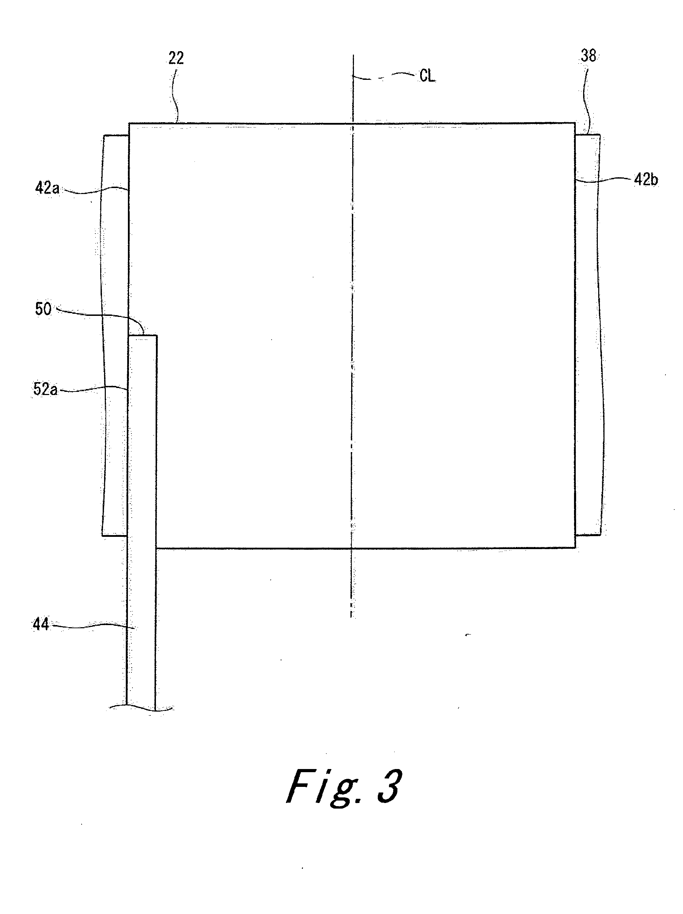

FIG. 3 shows a state in which formation of the band 24 is started. In FIG. 3, the leftward/rightward direction represents the axial direction of the tire 12, and the upward/downward direction represents the circumferential direction of the tire 12. In this production method, the ribbon 44 is fed from the head, and a foremost end 50 of the ribbon 44 is layered over the belt 22. As shown in the drawings, in this production method, at the foremost end 50, the ribbon 44 is aligned with the first end 42a of the belt 22. More specifically, the ribbon 44 is layered over the belt 22 such that an edge 52a (hereinafter, referred to as a first edge) of the ribbon 44 which is on a side closer to the first end 42a of the belt 22 is aligned with the first end 42a of the belt 22, at the foremost end 50. Thus, the formation of the band 24 is started.

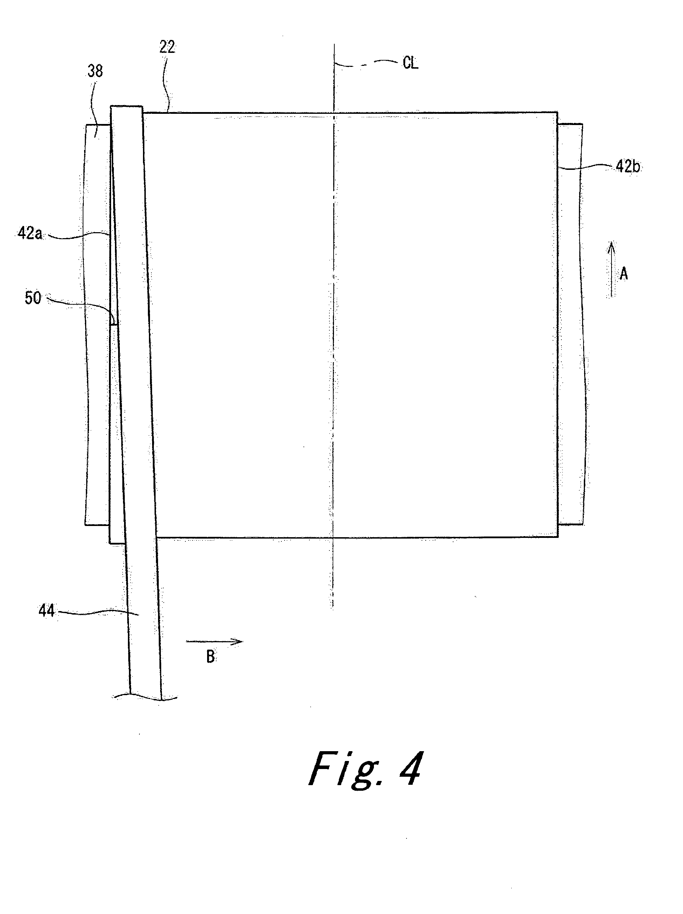

When the foremost end 50 of the ribbon 44 is layered over the belt 22, rotation of the drum is started. In this production method, when the drum has made 3/4 rotation, movement of the head is started. This state is shown in FIG. 4. In FIG. 4, a direction indicated by an arrow A represents a direction in which the drum rotates. A direction indicated by an arrow B represents a direction in which the head moves. In FIG. 4, the leftward/rightward direction represents the axial direction of the tire 12, and the upward/downward direction represents the circumferential direction of the tire 12. The direction in which the drum rotates conforms to the circumferential direction of the tire 12. The direction in which the head moves conforms to the axial direction of the tire 12.

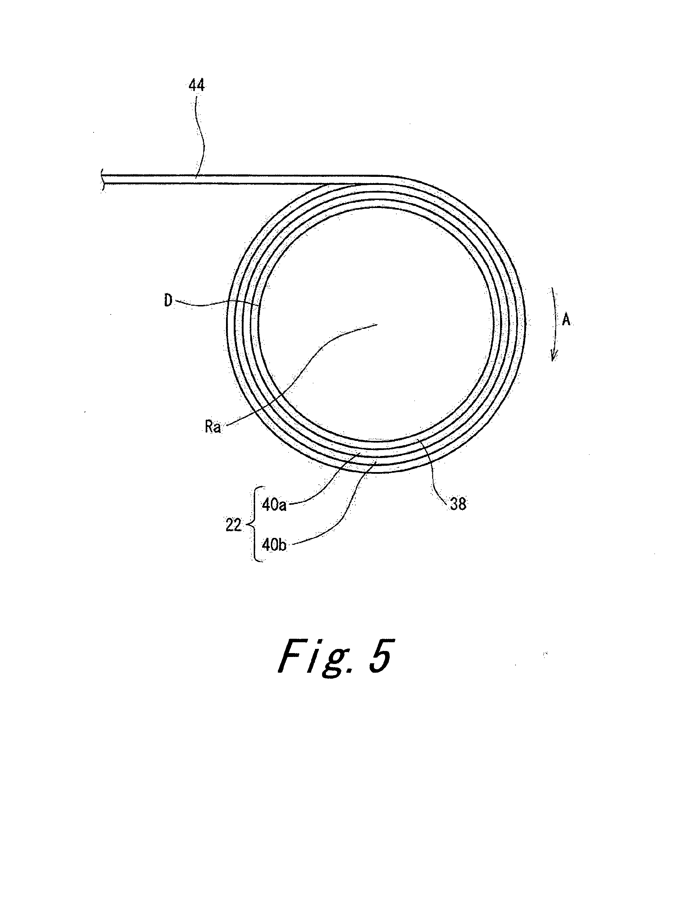

FIG. 5 is a side view of the portion shown in FIG. 4. In FIG. 5, reference character D represents a drum which forms a portion of the former. Reference character Ra represents a rotation axis of the drum D. In the former, the drum D is configured to rotate about the rotation axis Ra in the direction indicated by the arrow A. In the former, the rotation direction A is the forward rotation direction of the drum D.

In this production method, the head is moved toward the second end 42b of the belt 22 in the axial direction while feeding the ribbon 44. The drum D is rotated with the head being thus moved, so that the ribbon 44 is helically wound on and around the belt 22. In other words, in this production method, the drum D is rotated with the head being moved toward the second end 42b of the belt 22 in the axial direction, so that the ribbon 44 is helically wound.

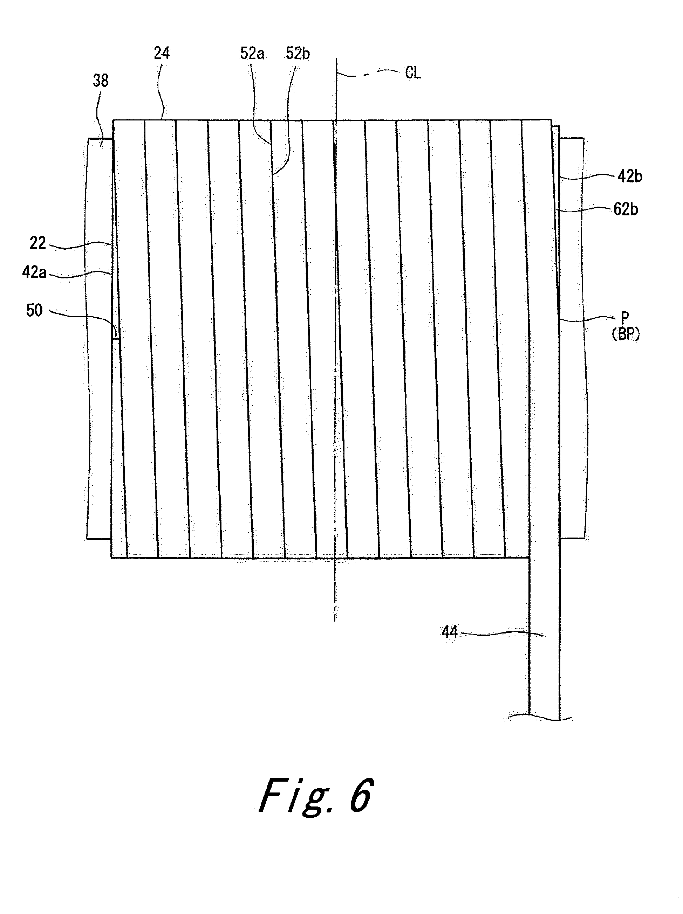

FIG. 6 shows the band 24 being formed. In FIG. 6, the leftward/rightward direction represents the axial direction of the tire 12, and the upward/downward direction represents the circumferential direction of the tire 12. In this production method, a pitch at which the ribbon 44 is wound is equivalent to the width of the ribbon 44. An edge 52b of the ribbon 44 which is on a side closer to the second end 42b of the belt 22, is referred to as a second edge. When the ribbon 44 is wound, the first edge 52a of the ribbon 44 to be layered is aligned with the second edge 52b of the ribbon 44 having been already layered. In this production method, the pitch at which the ribbon 44 is wound may be adjusted to wind the ribbon 44 such that a portion of the ribbon 44 to be layered overlaps a portion of the ribbon 44 having been already layered. The pitch at which the ribbon 44 is wound is determined, as necessary, in consideration of specifications of the tire 12 to be produced, and the like.

In this production method, when the second edge 52b of the ribbon 44 reaches the second end 42b of the belt 22, the movement of the head is stopped. Since the rotation of the drum D is maintained, the ribbon 44 is wound in the circumferential direction. In other words, in this production method, the movement of the head is stopped at the second end 42b of the belt 22 with the rotation of the drum D being maintained, thereby winding the ribbon 44 in the circumferential direction.

In FIG. 6, reference character P represents a position at which the second edge 52b of the ribbon 44 is aligned with the second end 42b of the belt 22. The position P also represents a reference position BP at which winding of the ribbon 44 in the circumferential direction is started.

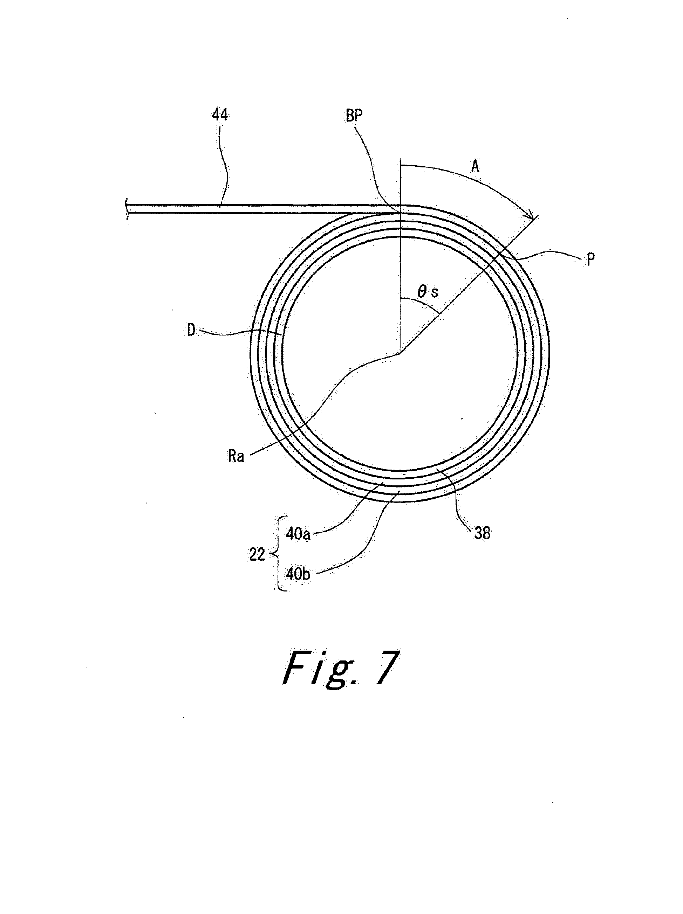

FIG. 7 shows a state in which the ribbon 44 is wound in the circumferential direction at the second end 42b of the belt 22. In FIG. 7, the drum D is further rotated from the position shown in FIG. 6 in the direction indicated by the arrow A. Thus, the position P is shifted forward from the reference position BP in the rotation direction. In FIG. 7, reference character θs represents a center angle between a line segment connecting between the rotation axis Ra of the drum D and the reference position BP, and a line segment connecting between the rotation axis Ra and the position P. The center angle θs represents a rotation angle of the drum in a process step of winding the ribbon 44 in the circumferential direction due to the cessation of the movement of the head.

In this production method, when the rearmost end of the ribbon 44 reaches the reference position BP, or reaches a position beyond the reference position BP in the rotation direction, the winding of the ribbon 44 in the circumferential direction is ended. More specifically, the rotation angle θs of the drum D in the process step of winding the ribbon 44 in the circumferential direction due to the cessation of the movement of the head is greater than or equal to 360°. Thus, the belt 22 is prevented from including, in the second end 42b portion, both a portion which is held by the ribbon 44 and a portion which is not held by the ribbon 44, in a mixed manner. In this production method, the band 24 uniformly holds the second end 42b portion of the belt 22 in the circumferential direction. The band 24 effectively restrains lifting of the belt 22. The tire 12 obtained in this production method is excellent in uniformity and has an appropriate conicity. The tire 12 enables excellent ride comfort and handling stability. From the viewpoint of a stiffness being appropriately maintained in the second end 42b of the belt 22, in this production method, the rotation angle θs is preferably not greater than 720°, is more preferably not greater than 540°, is even more preferably not greater than 450°, and is particularly preferably not greater than 405°.

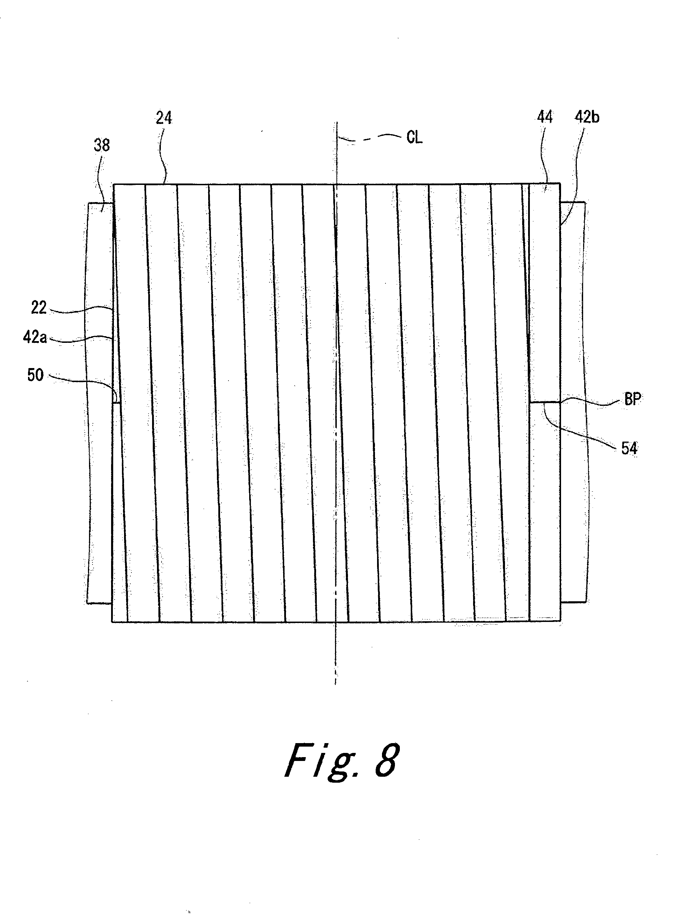

In this production method, when the winding of the ribbon 44 in the circumferential direction at the second end 42b of the belt 22 is ended, the winding of the ribbon 44 is completed. Thus, the band 24 is obtained. This state is shown in FIG. 8. In the band 24 shown in FIG. 8, a rearmost end 54 of the ribbon 44 is located at the reference position BP in the circumferential direction. For the band 24, after the second edge 52b of the ribbon 44 reaches the second end 42b of the belt 22, and the movement of the head is stopped, the drum makes one rotation in order to wind the ribbon 44 in the circumferential direction. In other words, for the band 24 shown in FIG. 8, the rotation angle θs of the drum D in the process step of winding the ribbon 44 in the circumferential direction due to the cessation of the movement of the head, is set as 360°.

In this production method, when the formation of the band 24 has been completed, components such as the tread 14 and the like are further incorporated. Thus, a raw cover (also referred to as a non-crosslinking tire) is obtained.

In this production method, the raw cover is put into a mold (not shown). Thus, the outer surface of the raw cover abuts against a cavity surface of the mold. The inner surface of the raw cover abuts against a bladder or a core. The raw cover is pressurized and heated in the mold. A rubber composition of the raw cover flows by pressurizing and heating process being performed. A crosslinking reaction occurs in the rubber by the heating process being performed, to obtain the tire 12.

As described above, in the tire 12 obtained in this production method, the belt 22 is prevented from including, in the second end 42b portion, both a portion which is held by the ribbon 44 and a portion which is not held by the ribbon 44, in a mixed manner. In this production method, the belt 22 has no portion held by the band 24 in a specific manner. The belt 22 is sufficiently held by the band 24. The band 24 can effectively restrain lifting of the belt 22. Therefore, the radial runout (RR) is appropriate in the tire 12 obtained in this production method. In the tire 12, a road noise (R/N) is reduced. The tire 12 has excellent silence.

In this production method, the belt 22 is sufficiently held by the band 24. Therefore, the width of the band 24 need not be excessively extended. In the tire 12 obtained in this production method, the band 24 has an appropriate width. The tire 12 is produced such that the ground contact shape is appropriate. The tire 12 enables excellent handling stability.

As described above, in this production method, when the foremost end 50 of the ribbon 44 is layered over the belt 22, the rotation of the drum is started. When the drum has made 3/4 rotation, the movement of the head is started. This production method includes a process step of winding, after the foremost end 50 of the ribbon 44 is layered over the belt 22, the ribbon 44 in the circumferential direction by rotating the drum without moving the head.

In this production method, also at the start of the winding of the ribbon 44, the ribbon 44 is wound in the circumferential direction. In order to prevent the belt 22 from including, also in the first end 42a portion, both a portion which is held by the ribbon 44, and a portion which is not held by the ribbon 44, in a mixed manner, it is preferable that, after the foremost end 50 of the ribbon 44 is layered over the belt 22, the movement of the head is started when the drum has made at least one rotation. In other words, a rotation angle θf of the drum is preferably greater than or equal to 360° in the process step of winding, after the foremost end 50 of the ribbon 44 is layered over the belt 22, the ribbon 44 in the circumferential direction by rotating the drum without moving the head. The band 24 having been thus formed can uniformly hold the first end 42a portion of the belt 22 in the circumferential direction. The band 24 can effectively restrain lifting of the belt 22. The tire 12 having the band 24 is excellent in uniformity, and has an appropriate conicity. The tire 12 enables excellent ride comfort and handling stability. In this production method, from the viewpoint of a stiffness being appropriately maintained in the first end 42a of the belt 22, the rotation angle θf is preferably not greater than 720°, is more preferably not greater than 540°, is even more preferably not greater than 450°, and is particularly preferably not greater than 405°.

In the present invention, the dimensions and angles of the components of the tire 12 are measured in a state where the tire 12 is incorporated in a normal rim, and the tire 12 is filled with air so as to obtain a normal internal pressure. During the measurement, no load is applied to the tire 12. In the description herein, the normal rim represents a rim which is specified according to the standard with which the tire 12 complies. The "standard rim" in the JATMA standard, the "Design Rim" in the TRA standard, and the "Measuring Rim" in the ETRTO standard are included in the normal rim. In the description herein, the normal internal pressure represents an internal pressure which is specified according to the standard with which the tire 12 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are included in the normal internal pressure. In the case of the tire 12 for use in passenger cars, the dimensions and angles are measured in a state where the internal pressure is 180 kPa.

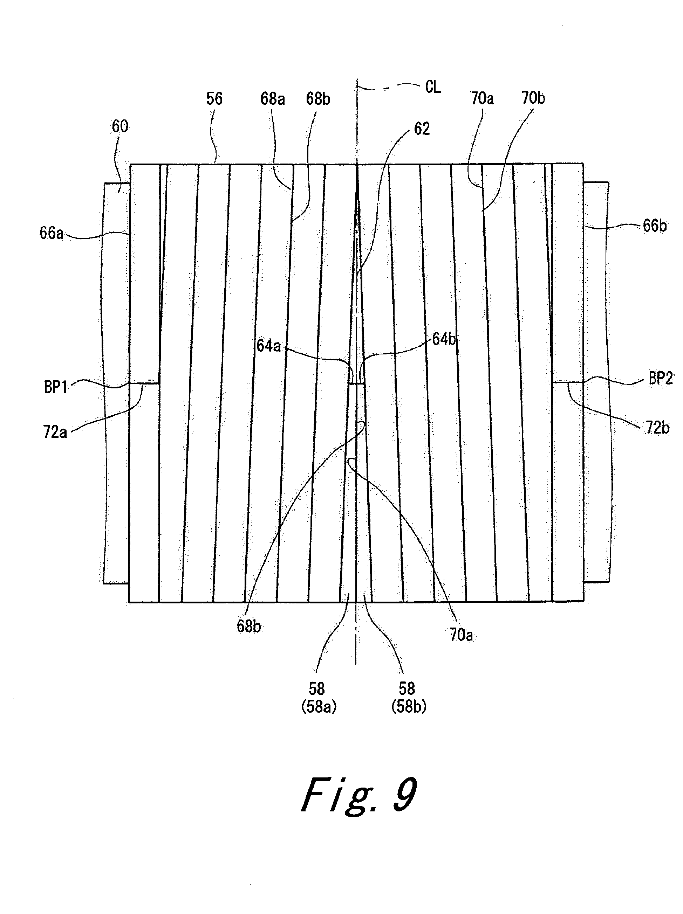

FIG. 9 shows a band 56 of a tire obtained in a production method according to another embodiment of the present invention. The tire has the same structure as the tire 12 shown in FIG. 1 except that the band 56 of this tire is formed by using a first ribbon 58a and a second ribbon 58b, which is not shown. In FIG. 9, the leftward/rightward direction represents the tire axial direction, and the upward/downward direction represents the tire circumferential direction. In the drawings, an alternate long and short dash line CL represents the tire equator plane.

In this production method, the band 56 is formed in the following manner. A plurality of first cords are extruded together with a topping rubber, to obtain the first ribbon 58a. The first ribbon 58a has the same structure as the ribbon 44 shown in FIG. 2. A plurality of second cords are extruded together with a topping rubber, to obtain the second ribbon 58b. The second ribbon 58b has the same structure as the ribbon 44 shown in FIG. 2. The first ribbon 58a and the second ribbon 58b are supplied to a former (not shown).

The former includes a cylindrical drum, a first head, and a second head. The drum is rotatable. The first head feeds the first ribbon 58a. The first head is movable in the axial direction. The first head not only feeds the first ribbon 58a, but also is movable in the axial direction. The second head feeds the second ribbon 58b. The second head is movable in the axial direction. The second head not only feeds the second ribbon 58b, but also is movable in the axial direction.

In this production method, the drum is rotated to wind a carcass ply 60 around the drum. Thus, the carcass ply 60 having a cylindrical shape is formed. A first sheet is wound around the carcass ply 60 having the cylindrical shape, to form an inner layer which forms a part of a belt 62. A second sheet is wound around the inner layer, to form an outer layer which forms another part of the belt 62. Thus, the belt 62 is obtained. The first ribbon 58a and the second ribbon 58b are wound on and around the belt 62, to form the band 56.

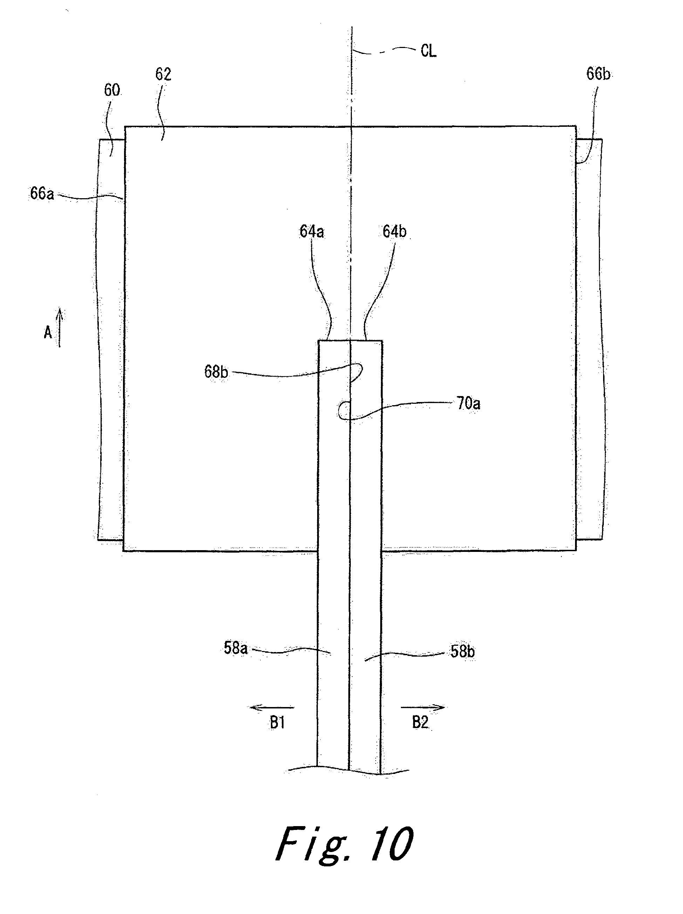

As shown in FIG. 10, in this production method, a foremost end 64a of the first ribbon 58a and a foremost end 64b of the second ribbon 58b are layered over the belt 62 on the equator plane. As shown in the drawings, the first ribbon 58a is layered over the belt 62 such that an edge 68b (hereinafter, referred to as a second edge) that is on a side of the first ribbon 58a which is closer to a second end 66b of the belt 62 is aligned with the equator plane at the foremost end 64a of the first ribbon 58a. The second ribbon 58b is layered over the belt 62 such that an edge 70a (hereinafter, referred to as a first edge) that is on a side of the second ribbon 58b which is closer to a first end 66a of the belt 62 is aligned with the equator plane at the foremost end 64b of the second ribbon 58b.

When the foremost end 64a of the first ribbon 58a and the foremost end 64b of the second ribbon 58b are layered over the belt 62, rotation of the drum is started. In FIG. 10, a direction indicated by an arrow A represents a direction in which the drum rotates. In this production method, when the drum has made 3/4 rotation, movement of each of the first head and the second head is started. In FIG. 10, a direction indicated by an arrow B1 represents a direction in which the first head moves, and a direction indicated by an arrow B2 represents a direction in which the second head moves. In this production method, the direction in which the drum rotates conforms to the tire circumferential direction. The direction in which the first head moves and the direction in which the second head moves each conform to the tire axial direction.

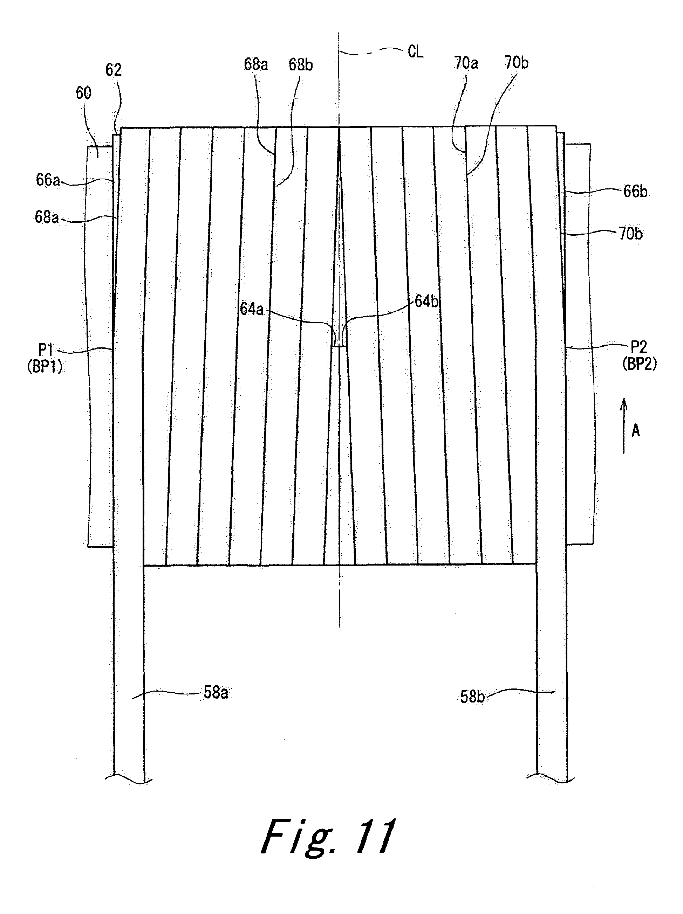

In this production method, the first head is moved from the equator plane toward the first end 66a of the belt 62 in the axial direction while feeding the first ribbon 58a. The drum is rotated with the first head being thus moved, so that the first ribbon 58a is helically wound on and around the belt 62. In other words, in this production method, the drum is rotated with the first head being moved toward the first end 66a of the belt 62 in the axial direction, so that the first ribbon 58a is helically wound. FIG. 11 shows a state in which the first ribbon 58a is wound.

In this production method, the second head is moved from the equator plane toward the second end 66b of the belt 62 in the axial direction while feeding the second ribbon 58b. The drum is rotated with the second head being thus moved, so that the second ribbon 58b is helically wound on and around the belt 62. In other words, in this production method, the drum is rotated with the second head being moved toward the second end 66b of the belt 62 in the axial direction, so that the second ribbon 58b is helically wound. FIG. 11 shows a state in which the second ribbon 58b is wound.

In this production method, a pitch at which the first ribbon 58a is wound is equivalent to the width of the first ribbon 58a. An edge 68a of the first ribbon 58a which is on a side closer to the first end 66a of the belt 62, is referred to as a first edge. When the first ribbon 58a is wound, the second edge 68b of the first ribbon 58a to be layered is aligned with the first edge 68a of the first ribbon 58a having been already layered. In this production method, the pitch at which the first ribbon 58a is wound may be adjusted to wind the first ribbon 58a such that a portion of the first ribbon 58a to be layered overlaps a portion of the first ribbon 58a having been already layered.

In this production method, a pitch at which the second ribbon 58b is wound is equivalent to the width of the second ribbon 58b. An edge 70b of the second ribbon 58b which is on a side closer to the second end 66b of the belt 62, is referred to as a second edge. When the second ribbon 58b is wound, the first edge 70a of the second ribbon 58b to be layered is aligned with the second edge 70b of the second ribbon 58b having been already layered. In this production method, the pitch at which the second ribbon 58b is wound may be adjusted to wind the second ribbon 58b such that a portion of the second ribbon 58b to be layered overlaps a portion of the second ribbon 58b having been already layered.

In this production method, when the first edge 68a of the first ribbon 58a reaches the first end 66a of the belt 62, the movement of the first head is stopped. Since the rotation of the drum is maintained, the first ribbon 58a is wound in the circumferential direction. In other words, in this production method, the movement of the head is stopped at the first end 66a of the belt 62 with the rotation of the drum being maintained, thereby winding the first ribbon 58a in the circumferential direction.

In FIG. 11, reference character P1 represents a position at which the first edge 68a of the first ribbon 58a is aligned with the first end 66a of the belt 62. The position P1 also represents a reference position BP1 at which the winding of the first ribbon 58a in the circumferential direction is started.

In this production method, the position P1 is shifted from the reference position BP1 forward in the rotation direction by the drum being further rotated in the forward rotation direction, which is not shown. In this moving state, a center angle θs1 between a line segment connecting between the rotation axis Ra of the drum and the reference position BP1, and a line segment connecting between the rotation axis Ra and the position P1, represents a rotation angle of the drum in the process step of winding the first ribbon 58a in the circumferential direction due to the cessation of the movement of the first head.

In this production method, when the rearmost end of the first ribbon 58a reaches the reference position BP1, or reaches a position beyond the reference position BP1 in the rotation direction, the winding of the first ribbon 58a in the circumferential direction is ended. More specifically, the rotation angle θs1 of the drum in the process step of winding the first ribbon 58a in the circumferential direction due to the cessation of the movement of the first head is greater than or equal to 360°. Thus, the belt 62 is prevented from including, in the first end 66a portion, both a portion which is held by the first ribbon 58a, and a portion which is not held by the first ribbon 58a, in a mixed manner. In this production method, the band 56 uniformly holds the first end 66a portion of the belt 62 in the circumferential direction. The band 56 effectively restrains lifting of the belt 62. The tire 12 obtained in this production method is excellent in uniformity, and has an appropriate conicity. The tire 12 enables excellent ride comfort and handling stability. In this production method, from the viewpoint of a stiffness being appropriately maintained in the first end 66a of the belt 62, the rotation angle θs1 is preferably not greater than 720°, is more preferably not greater than 540°, is even more preferably not greater than 450°, and is particularly preferably not greater than 405°.

In this production method, when the second edge 70b of the second ribbon 58b reaches the second end 66b of the belt 62, the movement of the second head is stopped. Since the rotation of the drum is maintained, the second ribbon 58b is wound in the circumferential direction. In other words, in this production method, the movement of the head is stopped at the second end 66b of the belt 62 with the rotation of the drum being maintained, thereby winding the second ribbon 58b in the circumferential direction.

In FIG. 11, reference character P2 represents a position at which the second edge 70b of the second ribbon 58b is aligned with the second end 66b of the belt 62. The position P2 also represents a reference position BP2 at which the winding of the second ribbon 58b in the circumferential direction is started.

In this production method, the position P2 is shifted from the reference position BP2 forward in the rotation direction by the drum being further rotated in the forward rotation direction, which is not shown. In this moving state, a center angle θs2 between a line segment connecting between the rotation axis Ra of the drum and the reference position BP2, and a line segment connecting between the rotation axis Ra and the position P2, represents a rotation angle of the drum in the process step of winding the second ribbon 58b in the circumferential direction due to the cessation of the movement of the second head.

In this production method, when the rearmost end of the second ribbon 58b reaches the reference position BP2, or reaches a position beyond the reference position BP2 in the rotation direction, the winding of the second ribbon 58b in the circumferential direction is ended. More specifically, the rotation angle θs2 of the drum in the process step of winding the second ribbon 58b in the circumferential direction due to the cessation of the movement of the second head is greater than or equal to 360°. Thus, the belt 62 is prevented from including, in the second end 66b portion, both a portion which is held by the second ribbon 58b, and a portion which is not held by the second ribbon 58b, in a mixed manner. In this production method, the band 56 uniformly holds the second end 66b portion of the belt 62 in the circumferential direction. The band 56 effectively restrains lifting of the belt 62. The tire 12 obtained in this production method is excellent in uniformity, and has an appropriate conicity. The tire 12 enables excellent ride comfort and handling stability. In this production method, from the viewpoint of a stiffness being appropriately maintained in the second end 66b of the belt 62, the rotation angle θs2 is preferably not greater than 720°, is more preferably not greater than 540°, is even more preferably not greater than 450°, and is particularly preferably not greater than 405°. In this production method, the winding of the first ribbon 58a and the winding of the second ribbon 58b are simultaneously performed, so that the rotation angle θs2 is equal to the rotation angle θs1.

In this production method, when the winding of the first ribbon 58a in the circumferential direction at the first end 66a of the belt 62 is ended, and the winding of the second ribbon 58b in the circumferential direction at the second end 66b of the belt 62 is ended, winding of each of the first ribbon 58a and the second ribbon 58b is completed. Thus, the band 56 is obtained. This state is shown in FIG. 9. In the band 56 shown in FIG. 9, the rearmost end 72a of the first ribbon 58a is located at the reference position BP1 in the circumferential direction, and the rearmost end 72b of the second ribbon 58b is located at the reference position BP2 in the circumferential direction. For the band 56, after the first edge 68a of the first ribbon 58a reaches the first end 66a of the belt 62, and the movement of the first head is stopped, the drum makes one rotation in order to wind the first ribbon 58a in the circumferential direction. After the second edge 70b of the second ribbon 58b reaches the second end 66b of the belt 62, and the movement of the second head is stopped, the drum makes one rotation in order to wind the second ribbon 58b in the circumferential direction. In other words, for the band 56 shown in FIG. 9, the rotation angle θs1 of the drum in the process step of winding the first ribbon 58a in the circumferential direction due to the cessation of the movement of the first head, is set as 360°. The rotation angle θs2 of the drum in the process step of winding the second ribbon 58b in the circumferential direction due to the cessation of the movement of the second head, is set as 360°.

In this production method, when the formation of the band 56 has been completed, components such as a tread and the like are further incorporated. Thus, a raw cover (also referred to as a non-crosslinking tire) is obtained.

In this production method, the raw cover is put into a mold (not shown). Thus, the outer surface of the raw cover abuts against a cavity surface of the mold. The inner surface of the raw cover abuts against a bladder or a core. The raw cover is pressurized and heated in the mold. A rubber composition of the raw cover flows by pressurizing and heating process being performed. A crosslinking reaction occurs in the rubber by the heating process being performed, to obtain a tire.

As described above, in the tire obtained in this production method, the belt 62 is prevented from including, in the first end 66a portion, both a portion which is held by the first ribbon 58a, and a portion which is not held by the first ribbon 58a, in a mixed manner. In this production method, the belt 62 has no portion held by the band 56 in a specific manner. The belt 62 is sufficiently held by the band 56. The band 56 can efficiently restrain lifting of the belt 62. Therefore, the radial runout (RR) is appropriate in the tire obtained in this production method. In this tire, a road noise (R/N) is reduced. This tire has excellent silence.

As described above, in the tire obtained in this production method, the belt 62 is prevented from including, in the second end 66b portion, both a portion which is held by the second ribbon 58b, and a portion which is not held by the second ribbon 58b, in a mixed manner. In this production method, the belt 62 has no portion held by the band 56 in a specific manner. The belt 62 is sufficiently held by the band 56. The band 56 can efficiently restrain lifting of the belt 62. Therefore, the radial runout (RR) is appropriate in the tire obtained in this production method. In the tire, a road noise (R/N) is reduced. The tire has excellent silence.

In this production method, the belt 62 is sufficiently held by the band 56. Therefore, the width of the band 56 need not be excessively extended. In the tire obtained in this production method, the band 56 has an appropriate width. The tire is produced such that the ground contact shape is appropriate. The tire enables excellent handling stability.

### EXAMPLES

Hereinafter, effects of the present invention will become apparent according to examples. However, the present invention should not be restrictively construed based on the description of examples.

### [Example 1]

A pneumatic tire having the structure shown in FIG. 1 was produced. The size of the tire was "175/65R14 82T". In order to produce the pneumatic tire, cords and a topping rubber were extruded, to form a ribbon having a width RW of 15 mm. The cords formed of a nylon fiber were used. The diameter of each cord was 1.0 mm. The intermediate elongation of the cord was 10%. In a former having a cylindrical drum and a head, sheets were wound around the drum, to form a belt. The ribbon was fed from the head, and the foremost end of the ribbon was layered over the belt. When the ribbon was thus layered, a first edge of the ribbon was aligned with a first end of the belt. After the ribbon was layered, the drum made 3/4 rotation. Thereafter, movement of the head was started. The drum was rotated with the head being moved toward the second end of the belt in the axial direction, so that the ribbon was helically wound. The movement of the head was stopped at the second end of the belt with the rotation of the drum being maintained, so that the ribbon was wound in the circumferential direction. At this time, the rotation angle θs of the drum was 360°.

As described above, in example 1, after the ribbon was layered, the drum made 3/4 rotation, and thereafter the movement of the head was started. Therefore, in example 1, the rotation angle θf of the drum was 270°in the process step of winding, after the foremost end of the ribbon was layered over the belt, the ribbon in the circumferential direction by rotating the drum without moving the head. This state is indicated as rotation angle θf in tables.

### [Example 2 to 6]

The tires were each produced in the same manner as in example 1 except that the width RW of the ribbon was as indicated below in table 1 and table 2.

### [Comparative example 2 and 3]

The tires were each produced in the same manner as in example 1 except that the rotation angle θs was as indicated below in table 2.

### [Example 7]

The tire was produced in the same manner as in example 1 except that the rotation angle θf was as indicated below in table 2.

### [Comparative example 1]

The tire was produced in a conventional production method. In comparative example 1, when the ribbon reached the second end of the belt, the movement of the head was stopped, and the rotation of the drum was also stopped. In comparative example 1, at the second end of the belt, the ribbon was not wound in the circumferential direction.

### [Example 8]

A pneumatic tire having the structure shown in FIG. 1 was produced. The size of the tire was "175/65R14 82T". In order to produce the pneumatic tire, cords and a topping rubber were extruded, to form two ribbons each of which has a width RW of 15 mm. The cords formed of a nylon fiber were used. The diameter of each cord was 1.0 mm. The intermediate elongation of the cord was 10%. In a former having a cylindrical drum, a first head, and a second head, sheets were wound around the drum, to form a belt. The first ribbon was fed from the first head, and the foremost end of the first ribbon was layered over the belt. When the first ribbon was thus layered, a second edge of the first ribbon was aligned with the equator plane. The second ribbon was fed from the second head, and the foremost end of the second ribbon was layered over the belt. When the second ribbon was thus layered, a first edge of the second ribbon was aligned with the equator plane. After the first ribbon and the second ribbon were layered, the drum made 3/4 rotation. Thereafter, the movement of each of the first head and the second head was started. The drum was rotated with the first head being moved toward the first end of the belt in the axial direction, so that the first ribbon was helically wound. The movement of the first head was stopped at the first end of the belt with the rotation of the drum being maintained, so that the first ribbon was wound in the circumferential direction. At this time, the rotation angle θs1 of the drum was 360°. The drum was rotated with the second head being moved toward the second end of the belt in the axial direction, so that the second ribbon was helically wound. The movement of the second head was stopped at the second end of the belt with the rotation of the drum being maintained, so that the second ribbon was wound in the circumferential direction. At this time, the rotation angle θs2 of the drum was 360°.

As described above, in example 8, after the ribbons were layered, the drum made 3/4 rotation, and thereafter the movement of each of the first head and the second head was started. Therefore, in example 8, the rotation angle θf1 of the drum was 270° in the process step of winding, after the foremost end of the first ribbon was layered over the belt, the ribbon in the circumferential direction by rotating the drum without moving the first head. This state is indicated as rotation angle θf1 in table 3. In example 8, the rotation angle θf2 of the drum was also 270°in the process step of winding, after the foremost end of the second ribbon was layered over the belt, the second ribbon in the circumferential direction by rotating the drum without moving the second head. This state is indicated as rotation angle θf2 in table 3.

### [Comparative example 4]

The tire was produced in a conventional production method. In comparative example 4, the tire was produced in the same manner as in example 8 except that, when the first ribbon reached the first end of the belt, and the second ribbon reached the second end of the belt, the movement of each of the first head and the second head was stopped, and the rotation of the drum was also stopped. In comparative example 4, the first ribbon was not wound in the circumferential direction at the first end of the belt. Further, the second ribbon was not wound in the circumferential direction at the second end of the belt.

### [Uniformity]

A lateral force variation (LFV), a radial runout (RR), and a conicity (CON) were measured in compliance with the conditions for uniformity test defined in "JASO C607:2000". An average of values of results obtained by measurement for 20 tires is indicated below as an index value for each of examples and comparative examples in table 1, table 2, and table 3 on the assumption that a value for comparative example 1 is 100. The greater the index value is, the higher the evaluation is.

### [Silence]

An R/N was measured by using a bench test machine for a road noise (R/N). The results are indicated below as index values in table 1, table 2, and table 3 on the assumption that a value for comparative example 1 is 100. The greater the index value is, the higher the evaluation is.

### [Handling stability]

A cornering power (CP) was measured by using a flat belt type test machine. The results are indicated below as index values in table 1, table 2, and table 3 on the assumption that a value for comparative example 1 is 100. The greater the index value is, the higher the evaluation is.

### [Productivity]

The number of tires which were able to be produced in a unit time period was measured. The results are indicated below as index values in table 1, table 2, and table 3 on the assumption that a value for comparative example 1 is 100. The greater the index value is, the higher the evaluation is.

**Table 1 Evaluation result**

| | Comp. ex.1 | Ex.2 | Ex.3 | Ex.4 | Ex.1 |
|---|---|---|---|---|---|
| Width RW [mm] of ribbon | 15 | 5 | 7 | 10 | 15 |
| Rotation angle θf [°(degrees)] | 270 | 270 | 270 | 270 | 270 |
| Rotation angle θs [°(degrees)] | - | 360 | 360 | 360 | 360 |
| LFV | 100 | 115 | 110 | 105 | 101 |
| CON | 100 | 115 | 110 | 105 | 101 |
| R/N | 100 | 101 | 103 | 104 | 106 |
| RR | 100 | 110 | 106 | 102 | 100 |
| CP | 100 | 110 | 105 | 101 | 100 |
| Productivity | 100 | 85 | 95 | 102 | 107 |

**Table 2 Evaluation result**

| | Ex.5 | Ex.6 | Comp. ex.2 | Comp. ex.3 | Ex.7 |
|---|---|---|---|---|---|
| Width RW [mm] of ribbon | 22 | 25 | 15 | 15 | 15 |
| Rotation angle θf [°(degrees)] | 270 | 270 | 270 | 270 | 360 |
| Rotation angle θs [°(degrees)] | 360 | 360 | 270 | 180 | 360 |
| LFV | 97 | 90 | 101 | 100 | 102 |
| CON | 97 | 90 | 101 | 100 | 102 |
| R/N | 107 | 110 | 105 | 104 | 106 |
| RR | 98 | 95 | 100 | 100 | 101 |
| CP | 99 | 95 | 100 | 100 | 101 |
| Productivity | 110 | 120 | 103 | 104 | 108 |

**Table 3 Evaluation result**

| | Ex.8 | Comp. ex.4 |
|---|---|---|
| Width RW1 [mm] of first ribbon | 15 | 15 |
| Rotation angle θf1 [°(degrees)] | 270 | 270 |
| Rotation angle θs1 [°(degrees)] | 360 | - |
| Width RW2 [mm] of second ribbon | 15 | 15 |
| Rotation angle θf2 [°(degrees)] | 270 | 270 |
| Rotation angle θs2 [°(degrees)] | 360 | - |
| LFV | 105 | 101 |
| CON | 105 | 101 |
| R/N | 103 | 100 |
| RR | 103 | 100 |
| CP | 105 | 101 |
| Productivity | 104 | 101 |

As indicated in table 1, table 2, and table 3, the evaluation is higher in the production methods according to examples than in the production methods according to comparative examples. The evaluation result clearly indicates that the present invention is superior.

The method described above is applicable to production of various vehicles. The application described herein is an exemplary application.

The foregoing description is in all aspects illustrative, and various modifications can be devised without departing from the scope of the invention, as defined in the appended claims.

## Claims

1. A tire production method for producing a tire (12) by using a former having a cylindrical rotatable drum (D) and a head movable in an axial direction (Ra), the tire production method comprising the steps of:
extruding a cord (46) and a topping rubber (48), to obtain a ribbon (44);
winding a sheet around the drum (D), to obtain a belt (22);
feeding the ribbon (44) from the head, to layer a foremost end (50) of the ribbon (44) over the belt (22);
helically winding the ribbon (44) by rotating the drum (D) with the head being moved toward an end of the belt (22) in the axial direction; and
winding the ribbon (44) in a circumferential direction by stopping moving the head, at the end of the belt(22), with rotation of the drum (D) being maintained,
**characterized in that**
in the step of winding the ribbon (44) in the circumferential direction by stopping moving the head, a rotation angle θs of the drum (D) is greater than or equal to 360°, and
the width (RW) of the ribbon (44) is in a range of 10-15 mm.

2. The tire production method according to claim 1, further comprising the step of
winding, after the foremost end of (50) the ribbon (44) is layered over the belt (22), the ribbon (44) in the circumferential direction by rotating the drum (D) without moving the head, wherein a rotation angle θf of the drum (D) is greater than or equal to 360°.

## Patentansprüche

1. Reifenherstellungsverfahren zum Herstellen eines Reifens (12) unter Verwendung einer Formungseinrichtung, die eine zylindrische drehbare Trommel (D) und einen Kopf, der in einer axialen Richtung (Ra) bewegbar ist, aufweist, wobei das Reifenherstellungsverfahren die Schritte umfasst:
Extrudieren eines Kords (46) und eines Gummierungskautschuks (48), um ein Band (44) zu erhalten;
Wickeln einer Bahn um die Trommel (D), um einen Gürtel (22) zu erhalten;
Zuführen des Bandes (44) von dem Kopf, um ein vorderstes Ende (50) des Bandes (44) über den Gürtel (22) zu schichten;
wendelförmiges Wickeln des Bandes (44) durch Drehen der Trommel (D), wobei sich der Kopf zu einem Ende des Gürtels (22) in der axialen Richtung bewegt; und
Wickeln des Bandes (44) in einer Umfangsrichtung durch Stoppen der Bewegung des Kopfes am Ende des Gürtels (22), wobei die Drehung der Trommel (D) aufrecht erhalten wird,
**dadurch gekennzeichnet, dass**
in dem Schritt des Wickelns des Bandes (44) in der Umfangsrichtung durch Stoppen der Bewegung des Kopfes ein Drehwinkel θs der Trommel (D) größer als oder gleich 360° ist, und
die Breite (RW) des Bandes (44) im Bereich von 10 - 15 mm liegt.

2. Reifenherstellungsverfahren nach Anspruch 1,
das ferner den Schritt umfasst
nachdem das vorderste Ende (50) des Bandes (44) über den Gürtel (22) geschichtet worden ist, Wickeln des Bandes (44) in der Umfangsrichtung durch Drehen der Trommel (D) ohne Bewegen des Kopfes, wobei ein Drehwinkel θf der Trommel (D) größer als oder gleich 360° ist.

## Revendications

1. Procédé de production de pneumatiques pour produire un pneumatique (12) en utilisant un dispositif de formage ayant un tambour cylindrique rotatif (D) et une tête mobile dans une direction axiale (Ra), le procédé de production de pneumatiques comprenant les étapes consistant à :
extruder un câblé (42) et un caoutchouc d'enrobage (48) pour obtenir un ruban (44) ;
enrouler une feuille autour du tambour (D) pour obtenir une ceinture (22) ;
alimenter le ruban (44) depuis la tête, pour poser une extrémité antérieure (50) du ruban (44) en formant une couche par-dessus la ceinture (22) ;
enrouler en hélice le ruban (44) en mettant le tambour (D) en rotation alors que la tête est déplacée vers une extrémité de la ceinture (22) dans la direction axiale ; et
enrouler le ruban (44) dans une direction circonférentielle en arrêtant le déplacement de la tête, à la fin de la ceinture (22), alors que l'on maintient la rotation du tambour (D),
**caractérisé en ce que**
dans l'étape d'enroulement du ruban (44) dans la direction circonférentielle en arrêtant le déplacement de la tête, un angle de rotation θs du tambour (D) est supérieur ou égal à 360°, et
la largeur (RW) du ruban (44) est dans une plage de 10 à 15 mm.

2. Procédé de production de pneumatiques selon la revendication 1, comprenant en outre l'étape consistant à, après avoir posé l'extrémité antérieure (50) du ruban (44) en formant une couche par-dessus la ceinture (22), enrouler le ruban (44) dans la direction circonférentielle en mettant le tambour (D) en rotation sans déplacer la tête, dans lequel un angle de rotation θf du tambour (D) est supérieur ou égal à 360°.
